# EUROPEAN PATENT APPLICATION

(11) **EP 3 428 844 A1**
(43) Date of publication of application: **16.01.2019**
(21) Application number: 18180523.5
(22) Date of filing: 28.06.2018
(51) Int. Cl.: G06K 9/00, G06K 9/46

(54) **ASSESSING IMAGE DOCUMENT TYPES**

(30) Priority: 13.07.2017 GB 201711308
(71) Applicant: GB Group plc, London E14 9QD (GB)
(72) Inventor: Alitto, M Moneer, London, E14 9QD (GB)
(74) Representative: Armstrong, Rosemary

(57) **Abstract**

A method of assessing a type of a document from an image of the document comprising the steps of capturing the image of the document (10), detecting a representation of the document in the captured image (12), producing a de-warped representation of the document (14), selecting a set of K keypoints of the de-warped representation of the document (16), calculating a descriptor of the de-warped representation of the document at each keypoint (18), using the descriptors and a pre-generated descriptor dictionary to generate a signature of the de-warped representation of the document (20), and using the signature and a pre-generated signature database classified by document type to determine the type of the document of the de-warped representation of the document (22). The invention further comprises computer software and a system for assessing a type of a document from an image of the document. The method etc. enables assessment of document type which is substantially invariant to scale and rotation of the image and different light conditions and different capture conditions.

## Description

### Field of the Invention

The invention relates to a method, software and system for assessing a type of a document in an image of the document, particularly, but not exclusively, for assessing a type of an identification document in an image.

### Background to the Invention

Various situations exist in which it is desirable or necessary to examine a document in an image and make some assessment of the type of the document. For example, in the security field where identification documents (IDs) are used it is often necessary to examine a scanned image of an ID and determine what type of ID is being presented. If the correct type of ID has been presented, a decision can then be made concerning any further processing of the ID that may be required and, for example, access of the presenter of the ID to a secured function or location.

Assessing the type of a document in an image of the document is not a straightforward task. The assessment will be affected by a number of factors. For example, the circumstances of capture of the image comprising the document, such as the size of the document within the image, the orientation of the image and the light conditions during capture will all affect the task of assessing the document type. In addition, in many situations, the goal is real-time document assessment. A robust assessment method that takes account of these issues is therefore desirable.

### Summary of the Invention

According to a first aspect of the invention there is provided a method of assessing a type of a document from an image of the document comprising the steps of:
(i) capturing the image of the document,
(ii) detecting a representation of the document in the captured image,
(iii) producing a de-warped representation of the document,
(iv) selecting a set of K keypoints of the de-warped representation of the document,
(v) calculating a descriptor of the de-warped representation of the document at each keypoint,
(vi) using the descriptors and a pre-generated descriptor dictionary to generate a signature of the de-warped representation of the document, and
(vii) using the signature and a pre-generated signature database classified by document type to determine a document type of the de-warped representation of the document.

Capturing the image of the document may comprise instructing a user to use an image capture device to capture the image. The image capture device may be a camera. The camera may be provided in a mobile phone. The image capture device may be a video recorder. The video recorder may be provided in a mobile phone. The user may be instructed to place the document in front of the camera or video recorder and to capture the image of the document. The image capture device may be a scanner. Capturing the image of the document may comprise receiving the image from a remote location.

Detecting the representation of the document may comprise detecting a plurality of estimated corner point locations of the document in the captured image. This may carried out manually or by using a known, software-based, detection method.

Producing the de-warped representation of the document may comprise calculating a first transformation for de-warping of the representation of the document and applying the first transformation to the representation of the document.

Calculating the first transformation for de-warping of the representation of the document may comprise using the plurality of estimated corner point locations of the document in the captured image. The first transformation may de-warp the representation of the document by flattening the representation of the document.

Applying the first transformation to the representation of the document may comprise multiplying the first transformation with locations of pixels of the representation of the document to produce locations of corresponding pixels of the de-warped representation of the document. The method may further comprise applying extracted intensities of the pixels of the representation of the document to the corresponding pixels of the de-warped representation of the document. The method may further comprise interpolating intensities of pixels of the representation of the document in the captured image to determine intensities of pixels of the de-warped representation of the document.

Selecting a set of K keypoints of the de-warped representation of the document may comprise, for each of a plurality of scales of the de-warped representation of the document, taking multiple derivatives of the intensity of the de-warped representation of the document and selecting K points of the de-warped representation of the document that show the least variation between derivatives as the keypoints. This may comprise using an ORB keypoint extraction technique. Selecting the set of K keypoints of the de-warped representation of the document using a plurality of scales of the de-warped representation of the document will result in invariance to scale.

Calculating a descriptor of the de-warped representation of the document at each keypoint may comprise calculating a texture descriptor which represents intensity at each keypoint. Calculating a texture descriptor which represents intensity at each keypoint may comprise calculating an N-coefficient scale and rotation invariant feature transform texture descriptor at each keypoint.

Calculating an N-coefficient texture descriptor at each keypoint may comprise:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

Creation of the orientation histogram and populating this using the intensity gradients of the pixels of the subregion results in the descriptor being invariant for rotation.

For example, a 8 pixel by 8 pixel region may be chosen around the keypoint. The 8 pixel by 8 pixel region may be divided into Z=4 subregions, each having 4 pixels by 4 pixels, and 4 orientation histograms, each having Y=8 bins, representing 8 intensity gradient orientations, created. The resulting descriptor would then have N = 4 times 8, i.e. 32, coefficients.

Using the descriptors of the de-warped representation of the document and the pre-generated descriptor dictionary to generate a signature of the de-warped representation of the document may comprise creating a histogram having a bin for each of a set of cluster centres of the dictionary, and, for each descriptor of the de-warped representation of the document, determining the closest cluster centre of the dictionary, adding +1 to the bin of the closest cluster centre and generating the signature of the de-warped representation of the document from the closest cluster centre bin of the histogram. The histogram represents the signature of the de-warped representation of the document.

Using the signature of the de-warped representation of the document and the pre-generated signature database to determine a document type of the de-warped representation of the document may comprise calculating the probability of the signature of the de-warped representation of the document being in each of a plurality of document type classes of the signature database, using the probabilities to identify a best document type class and determining the document type of the best class as the document type of the de-warped representation of the document.

Calculating the probability of the signature of the de-warped representation of the document being in each of the plurality of document type classes of the signature database may comprise using a k nearest neighbour (KNN) algorithm or a support vector machine (SVM) algorithm trained using the signature database classified by document type.

Using the probabilities to identify a best document type class may comprise identifying a document type class having a highest probability and determining the document type of the class as the document type of the de-warped representation of the document.

Alternatively, using the probabilities to identify a best document type class may comprise identifying a subset of the plurality of document type classes having probabilities within a pre-set range, selecting a best document type class from the subset of document type classes and determining the document type of the best class as the document type of the de-warped representation of the document.

Selecting the best document type class from the subset of document type classes may comprise standardising a rotational position of the de-warped representation of the document with respect to a rotational position of a training document image of each of the subset of document type classes and then matching a local region of the training document image of each of the subset of document type classes with a corresponding local region of the de-warped representation of the document and selecting the best document type class as the class of the subset of document type classes which has a highest match value.

Standardising a rotational position of the de-warped representation of the document with respect to a rotational position of a training document image of each of the subset of document type classes may comprise matching the descriptors of the keypoints of the de-warped representation of the document and descriptors of keypoints of the training document image of each of the subset of document type classes. Matching may comprise using a brute force matching algorithm or a FLANN matching algorithm.

Matching a local region of the training document image of each of the subset of document type classes with a corresponding local region of the de-warped representation of the document may comprise choosing a local region around a location in the training document image of each of the subset of document type classes and determining a match value between the local region around the location in the training document image of each of the subset of document type classes and a local region around a corresponding location in the de-warped representation of the document.

The local region of the training document image of each of the subset of document type classes may be chosen using a knowledge of the training document images of the subset of document type classes. The local region of the training document image of each of the subset of document type classes may be chosen by comparing the local regions of the training document images of the subset of document type classes and choosing a region which maximises differences between the images of the classes.

The latter method of determining the document type of the de-warped representation of the document may be used when the document type has a high degree of similarity to several document types of the plurality of document type classes of the signature database.

The method may further comprise outputting the document type of the de-warped representation of the document.

The method may further comprise validation of the identified document type of the de-warped representation of the document. This may comprise standardising a rotational position of the de-warped representation of the document with respect to a rotational position of a training document image having a document type of the de-warped representation of the document and then matching a local region of the training document image with a corresponding local region of the de-warped representation of the document.

Standardising a rotational position of the de-warped representation of the document with respect to a rotational position of the training document image may comprise matching the descriptors of the keypoints of the de-warped representation of the document and descriptors of keypoints of the training document image. Matching may comprise using a brute force matching algorithm or a FLANN matching algorithm.

Matching a local region of the training document image with a corresponding local region of the de-warped representation of the document may comprise choosing a local region around a location in the training document image and determining a match value between the local region around the location in the training document image and a local region around a corresponding location in the de-warped representation of the document.

Generation of the descriptor dictionary and the signature database will now be described.

The descriptor dictionary may be generated using a plurality of dictionary document images each having a different document type by:
(i) selecting a set of K keypoints of each dictionary document image,
(ii) calculating a descriptor at each keypoint of each dictionary document image,
(iii) grouping the descriptors of the dictionary document images into a set of clusters,
(iv) averaging the descriptors of each cluster to calculate a cluster centre for each of the set of clusters, and
(v) concatenating the cluster centres to generate the descriptor dictionary.

Selecting a set of K keypoints of each image may comprise, for each of a plurality of scales of the image, taking multiple derivatives of the intensity of the image and selecting K points of the image that show the least variation between derivatives as the keypoints. This may comprise using an ORB keypoint extraction technique. Selecting the set of K keypoints of the images using a plurality of scales of the images will result in invariance to scale.

Calculating a descriptor at each keypoint of each image may comprise calculating a texture descriptor which represents image intensity at each keypoint. Calculating a texture descriptor which represents image intensity at each keypoint of each dictionary image may comprise calculating a scale and rotation invariant N-coefficient texture descriptor at each keypoint.

Calculating an N-coefficient texture descriptor at each keypoint of each image may comprise:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

Grouping the descriptors of the images into clusters may comprise using a clustering technique, e.g. a hierarchal clustering technique.

Clustering of the descriptors of the dictionary document images is used to avoid comparing each descriptor of the de-warped representation of the document being assessed against the descriptors of each of the dictionary document images. For example, there may be approximately 2 million dictionary document image descriptors which may be reduced to approximately 800 cluster centres.

The signature database may be generated using a plurality of training document images comprising for each document type of a plurality of different document types an image acquired for each of a plurality of different sets of conditions. The plurality of training document images for each document type may be obtained by capturing an image for a first set of conditions and using the captured image to mathematically create images for each of the remaining sets of conditions. The plurality of different sets of conditions may comprise any of different light conditions, different capture conditions. The different capture conditions may comprise different noise conditions.

When the signature database is generated using a plurality of training document images for each of a plurality of different document types acquired for each of a plurality of different sets of conditions, the document type assessment method is more robust as it is invariant for the differing conditions.

The plurality of different document types used for the training document images may be obtained from a user.

The signature database may be generated using the plurality of training document images for each of a plurality of different document types by:
(i) selecting a set of K keypoints of each training document image,
(ii) calculating a descriptor at each keypoint of each training document image,
(iii) using the descriptors and the pre-generated descriptor dictionary to generate a signature of each training document image, and
(iv) classifying the signatures of the training document images by document type.

Selecting a set of K keypoints of each image may comprise, for each of a plurality of scales of the image, taking multiple derivatives of the intensity of the image and selecting K points of the image that show the least variation between derivatives as the keypoints. This may comprise using an ORB keypoint extraction technique. Selecting the set of K keypoints of the images using a plurality of scales of the images will result in invariance to scale.

Calculating a descriptor at each keypoint of each image may comprise calculating a texture descriptor which represents image intensity at each keypoint. Calculating a texture descriptor which represents image intensity at each keypoint of each image may comprise calculating a scale and rotation invariant N-coefficient texture descriptor at each keypoint.

Calculating an N-coefficient texture descriptor at each keypoint of each image may comprise:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

For each training document image, using the training document image descriptors and the descriptor dictionary to generate a signature of the training document image may comprise creating a histogram having a bin for each of a set of cluster centres of the dictionary, and, for each descriptor of the training image, determining the closest cluster centre of the dictionary, adding +1 to the bin of the closest cluster centre and generating the signature of the training document image from the closest cluster centre bin of the histogram.

Classifying the signatures of the training document images by document type may comprise assigning each of the signatures to one of a plurality of document type classes of the signature database. Classifying the signatures of the training document images by document type may comprise using a classification algorithm such as a nearest neighbour algorithm to place each of the signatures in one of a plurality of document type classes of the signature database.

According to a second aspect of the invention there is provided an image document type assessment computer program, tangibly embodied on a non-transitory computer readable medium, the computer program including instructions for causing a computer to execute the method of assessing a type of a document from an image of the document according to the first aspect of the invention.

According to a third aspect of the invention there is provided a system for assessing a type of a document from an image of the document comprising:
(i) an image capture device which captures the image of the document,
(ii) a detector module which detects a representation of the document in the captured image,
(iii) a de-warp module which produces a de-warped representation of the document,
(iv) a selector module which selects a set of K keypoints of the de-warped representation of the document,
(v) a second calculator module which calculates a descriptor of the de-warped representation of the document at each keypoint,
(vi) a signature generator module which uses the descriptors and a pre-generated descriptor dictionary to generate a signature of the de-warped representation of the document, and
(vii) a type assessor module which uses the signature and a pre-generated signature database classified by document type to determine a document type of the de-warped representation of the document.

The document may be an ID and the method, software and system may be used in a number of situations, for example online bank account set-up where the bank receives images of one or more IDs and has to assess and possibly validate their document type.

### Description of the Invention

Embodiments of the present invention are herein described, by way of example of only, with reference to the accompanying drawings, in which:
Figure 1 is a schematic representation of a method of assessing a type of a document in an image of the document in accordance with the first aspect of the invention, and
Figure 2 is a schematic representation of a system for assessing a type of a document in an image of the document in accordance with the third aspect of the invention.

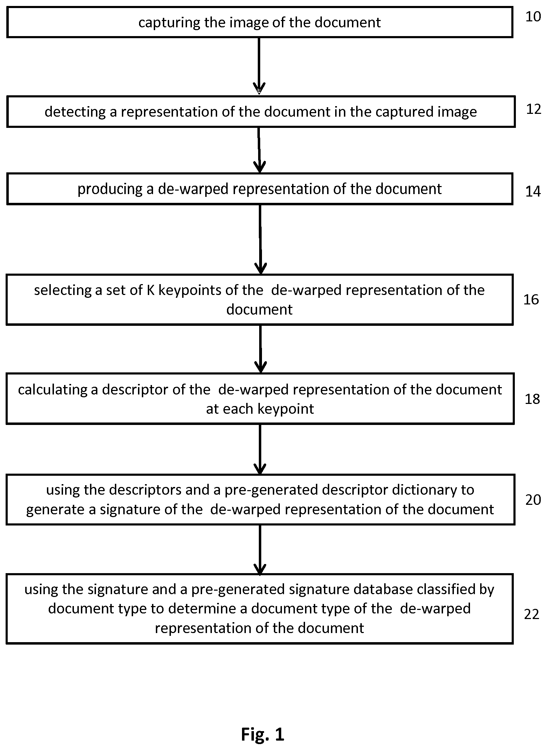

Referring to Figure 1, the method of assessing a type of a document from an image of the document comprises the steps of:
(i) capturing the image of the document 10,
(ii) detecting a representation of the document in the captured image 12,
(iii) producing a de-warped representation of the document 14,
(iv) selecting a set of K keypoints of the de-warped representation of the document 16,
(v) calculating a descriptor of the de-warped representation of the document at each keypoint 18,
(vi) using the descriptors and a pre-generated descriptor dictionary to generate a signature of the de-warped representation of the document 20, and
(vii) using the signature and a pre-generated signature database classified by document type to determine a document type of the de-warped representation of the document 22.

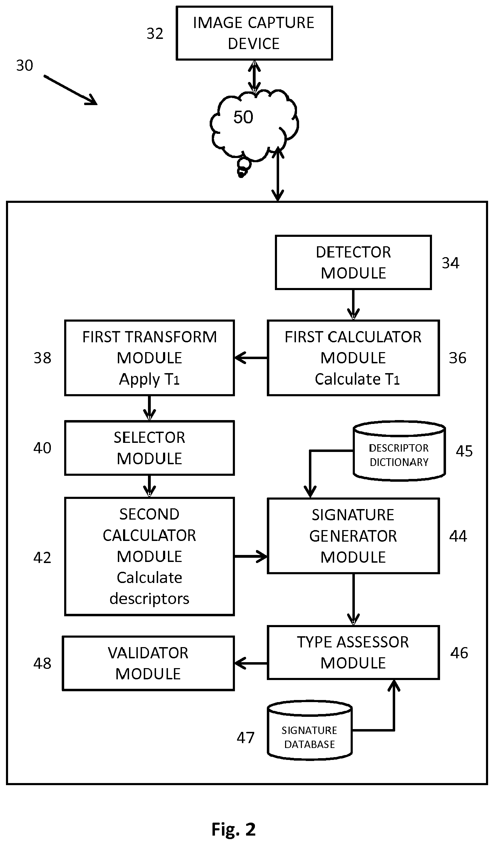

Referring to Figure 2, a system 30 for assessing a type of a document from an image of the document is described. This comprises an image capture device 32 for capturing the image of the document, a detector module 34 which detects a representation of the document in the captured image, a de-warp module comprising a first calculator module 36 which calculates a first transformation for de-warping of the representation of the document and a first transform module 38 which applies the first transformation to the representation of the document to produce a de-warped representation of the document, a selector module 40 which selects a set of K keypoints of the de-warped representation of the document, a second calculator module 42 which calculates a descriptor of the de-warped representation of the document at each keypoint, a signature generator module 44 which uses the descriptors and a pre-generated descriptor dictionary 45 to generate a signature of the de-warped representation of the document, and a type assessor module 46 which uses the signature and a pre-generated signature database 47 classified by document type to determine the type of the document of the de-warped representation of the document.

In this embodiment, the image capture device 32 comprises a device such as a camera or a video recorder or a scanner. The image capture device 32 is provided at a location of, or accessible to, a user of the system 30. The remaining modules of the system 30 can be comprised in a processor in a computer, which may be provided at a location of a provider of the system 30. The locations may be remote from each other and may be wirelessly connected via the Internet 50.

The detector module 34 first detects a representation of the document from the captured image. This comprises detecting a plurality of estimated corner point locations of the document in the captured image. This may carried out manually or by using a known, software-based, detection method.

The de-warp module then produces a de-warped representation of the document. The first calculator module 36 of the de-warp module calculates the first transformation for de-warping of the representation of the document. This comprises using the plurality of estimated corner point locations of the document in the captured image. The first transformation may de-warp the representation of the document by flattening the representation of the document.

The first transform module 38 of the de-warp module applies the first transformation to the representation of the document by multiplying the first transformation with locations of pixels of the representation of the document to produce locations of corresponding pixels of the de-warped representation of the document. This may further comprise applying extracted intensities of the pixels of the representation of the document to the corresponding pixels of the de-warped representation of the document and interpolating intensities of pixels of the representation of the document in the captured image to determine intensities of pixels of the de-warped representation of the document.

The selector module 40 then selects a set of K keypoints of the de-warped representation of the document. In this embodiment, this comprises, for each of a plurality of scales of the de-warped representation of the document, taking multiple derivatives of the intensity of the de-warped representation of the document and selecting K points of the de-warped representation of the document that show the least variation between derivatives as the keypoints. An ORB keypoint extraction technique is used for the keypoint selection. Selecting the set of K keypoints using a plurality of scales of the de-warped representation of the document results in invariance to scale.

A texture descriptor, which represents the intensity of the de-warped representation of the document at each keypoint, is then calculated by the second calculator module 42. This comprises calculating an N-coefficient scale and rotation invariant feature transform texture descriptor at each keypoint which comprises:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

In this embodiment, a 8 pixel by 8 pixel region is chosen around the keypoint. The 8 pixel by 8 pixel region is divided into Z=4 subregions, each having 4 pixels by 4 pixels, and 4 orientation histograms, each having Y=8 bins, representing 8 intensity gradient orientations, created. The resulting descriptor then has N = 4 times 8, i.e. 32, coefficients.

The signature generator module 44 uses the descriptors of the de-warped representation of the document and the pre-generated descriptor dictionary 45 to generate a signature of the de-warped representation of the document by creating a histogram having a bin for each of a set of cluster centres of the dictionary, and, for each descriptor of the de-warped representation of the document, determining the closest cluster centre of the dictionary, adding +1 to the bin of the closest cluster centre and generating the signature of the de-warped representation of the document from the closest cluster centre bin of the histogram.

The descriptor dictionary 45 is pre-generated and stored in the system 30. It will be appreciated that the descriptor dictionary could be stored elsewhere and accessed by the system 30. The descriptor dictionary 45 is generated using a plurality of dictionary document images each having a different document type by:
(i) selecting a set of K keypoints of each dictionary document image,
(ii) calculating a descriptor at each keypoint of each dictionary document image,
(iii) grouping the descriptors of the dictionary document images into a set of clusters,
(iv) averaging the descriptors of each cluster to calculate a cluster centre for each of the set of clusters, and
(v) concatenating the cluster centres to generate the descriptor dictionary.

The K keypoints of each dictionary document image are selected as above for the keypoints of the de-warped representation of the document. A descriptor at each keypoint of each dictionary document image is calculated as above for the descriptors of the de-warped representation of the document. Grouping the descriptors of the dictionary document images into one or more clusters comprises using a clustering technique, e.g. a hierarchal clustering technique.

The signature database 47 is pre-generated and stored in the system 30. It will be appreciated that the signature database could be stored elsewhere and accessed by the system 30. The signature database 47 is generated using a plurality of training document images for each of a plurality of different document types acquired for each of a plurality of different sets of conditions.

Using the plurality of training document images for each of a plurality of different document types, the signature database 47 is generated by:
(i) selecting a set of K keypoints of each training document image,
(ii) calculating a descriptor at each keypoint of each training document image,
(iii) using the descriptors and the pre-generated descriptor dictionary 45 to generate a signature of each training document image, and
(iv) classifying the signatures of the training document images by document type.

The set of K keypoints of each training document image is selected in the same way as selection of the keypoints of the de-warped representation of the document described above. A descriptor at each keypoint of each training document image is calculated as above for the descriptors of the de-warped representation of the document. For each training document image, using the training document image descriptors and the descriptor dictionary 45 to generate a signature of the training document image comprises creating a histogram having a set of cluster centres of the dictionary and, for each descriptor of the training document image, determining the closest cluster centre of the dictionary, adding +1 to the bin of the closest cluster centre and generating the signature of the training document image from the closest cluster centre bin of the histogram.

Classifying the signatures of the training document images by document type comprises placing each of the signatures in one of a plurality of document type classes of the signature database, using a nearest neighbour algorithm.

The type assessor module 46 uses the signature of the de-warped representation of the document and the pre-generated signature database to determine the type of the document. This comprises calculating a probability of the signature of the de-warped representation of the document being in each of a plurality of document type classes of the signature database, using the probabilities to identify a best document type class and determining the document type of the best class as the document type of the de-warped representation of the document.

Calculating the probability of the signature of the de-warped representation of the document being in each of the plurality of document type classes of the signature database comprises using a k nearest neighbour (KNN) algorithm or a support vector machine (SVM) algorithm trained using the signature database classified by document type.

Using the probabilities to identify a best document type class may comprise identifying a document type class having a highest probability and determining the document type of the class as the document type of the de-warped representation of the document.

Alternatively, using the probabilities to identify a best document type class may comprise identifying a subset of the plurality of document type classes having probabilities within a pre-set range, selecting a best document type class from the subset of document type classes and determining the document type of the best class as the document type of the de-warped representation of the document.

Selecting the best document type class from the subset of document type classes may comprise standardising a rotational position of the de-warped representation of the document with respect to a rotational position of a training document image of each of the subset of document type classes and then matching a local region of the training document image of each of the subset of document type classes with a corresponding local region of the de-warped representation of the document and selecting the best document type class as the class of the subset of document type classes which has a highest match value.

Standardising a rotational position of the de-warped representation of the document with respect to a rotational position of a training document image of each of the subset of document type classes may comprise matching the descriptors of the keypoints of the de-warped representation of the document and descriptors of keypoints of the training document image of each of the subset of document type classes. Matching may comprise using a brute force matching algorithm or a FLANN matching algorithm.

Matching a local region of the training document image of each of the subset of document type classes with a corresponding local region of the de-warped representation of the document may comprise choosing a local region around a location in the training document image of each of the subset of document type classes and determining a match value between the local region around the location in the training document image of each of the subset of document type classes and a local region around a corresponding location in the de-warped representation of the document.

The local region of the training document image of each of the subset of document type classes may be chosen using a knowledge of the training document images of the subset of document type classes. The local region of the training document image of each of the subset of document type classes may be chosen by comparing the local regions of the training document images of the subset of document type classes and choosing a region which maximises differences between the images of the classes.

The latter method of determining the document type of the de-warped representation of the document may be used when the document type has a high degree of similarity to several document types of the plurality of document type classes of the signature database.

The method may further comprise outputting the document type of the de-warped representation of the document.

In this embodiment, the system 30 further comprises a validator module 48 which validates the document type of the de-warped representation of the document. This comprises standardising a rotational position of the de-warped representation of the document with respect to a rotational position of a training document image having a document type of the de-warped representation of the document and then matching a local region of the training document image with a corresponding local region of the de-warped representation of the document.

Standardising a rotational position of the de-warped representation of the document with respect to a rotational position of the training document image comprises matching the descriptors of the keypoints of the de-warped representation of the document and descriptors of keypoints of the training document image. Matching may comprise using a brute force matching algorithm or a FLANN matching algorithm.

Matching a local region of the training document image with a corresponding local region of the de-warped representation of the document comprises choosing a local region around a location in the training document image and determining a match value between the local region around the location in the training document image and a local region around a corresponding location in the de-warped representation of the document.

## Claims

1. A method of assessing a type of a document from an image of the document comprising the steps of:
(i) capturing the image of the document,
(ii) detecting a representation of the document in the captured image,
(iii) producing a de-warped representation of the document,
(iv) selecting a set of K keypoints of the de-warped representation of the document,
(v) calculating a descriptor of the de-warped representation of the document at each keypoint,
(vi) using the descriptors and a pre-generated descriptor dictionary to generate a signature of the de-warped representation of the document, and
(vii) using the signature and a pre-generated signature database classified by document type to determine a document type of the de-warped representation of the document.

2. A method according to any preceding claim in which selecting a set of K keypoints of the de-warped representation of the document comprises, for each of a plurality of scales of the de-warped representation of the document, taking multiple derivatives of the intensity of the de-warped representation of the document and selecting K points of the de-warped representation of the document that show the least variation between derivatives as the keypoints.

3. A method according to any preceding claim in which calculating a descriptor of the de-warped representation of the document at each keypoint comprises calculating an N-coefficient scale and rotation invariant feature transform texture descriptor which represents intensity at each keypoint.

4. A method according to claim 3 in which calculating an N-coefficient texture descriptor at each keypoint comprises:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

5. A method according to any preceding claim in which using the descriptors of the de-warped representation of the document and the pre-generated descriptor dictionary to generate a signature of the de-warped representation of the document comprises creating a histogram having a bin for each of a set of cluster centres of the dictionary, and, for each descriptor of the de-warped representation of the document, determining the closest cluster centre of the dictionary, adding +1 to the bin of the closest cluster centre and generating the signature of the de-warped representation of the document from the closest cluster centre bin of the histogram.

6. A method according to any preceding claim in which using the signature of the de-warped representation of the document and the pre-generated signature database to determine a document type of the de-warped representation of the document comprises calculating the probability of the signature of the de-warped representation of the document being in each of a plurality of document type classes of the signature database, using the probabilities to identify a best document type class and determining the document type of the best class as the document type of the de-warped representation of the document.

7. A method according to any preceding claim in which the descriptor dictionary is generated using a plurality of dictionary document images each having a different document type by:
(i) selecting a set of K keypoints of each dictionary document image,
(ii) calculating a descriptor at each keypoint of each dictionary document image,
(iii) grouping the descriptors of the dictionary document images into a set of clusters,
(iv) averaging the descriptors of each cluster to calculate a cluster centre for each of the set of clusters, and
(v) concatenating the cluster centres to generate the descriptor dictionary.

8. A method according to any preceding claim in which the signature database is generated using a plurality of training document images comprising for each document type of a plurality of different document types an image acquired for each of a plurality of different sets of conditions.

9. A method according to claim 8 in which the signature database is generated using the plurality of training document images for each of a plurality of different document types by:
(i) selecting a set of K keypoints of each training document image,
(ii) calculating a descriptor at each keypoint of each training document image,
(iii) using the training document image descriptors and the pre-generated descriptor dictionary to generate a signature of each training document image, and
(iv) classifying the signatures of the training document images by document type.

10. A method according to claim 9 in which for each training document image, using the training document image descriptors and the descriptor dictionary to generate a signature of the training document image comprises creating a histogram having a bin for each of a set of cluster centres of the dictionary, and, for each descriptor of the training document image, determining the closest cluster centre of the dictionary, adding +1 to the bin of the closest cluster centre and generating the signature of the training document image from the closest cluster centre bin of the histogram.

11. A method according to claim 7 or claim 9 in which selecting a set of K keypoints of each image comprises, for each of a plurality of scales of the image, taking multiple derivatives of the intensity of the image and selecting K points of the image that show the least variation between derivatives as the keypoints.

12. A method according to claim 7 or claim 9 in which calculating a descriptor at each keypoint of each image comprises calculating a scale and rotation invariant N coefficient texture descriptor which represents image intensity at each keypoint.

13. A method according to claim 12 in which calculating an N-coefficient texture descriptor at each keypoint of each image comprises:
(i) choosing a X pixel times X pixel region centred around the keypoint,
(ii) for each pixel computing an intensity gradient,
(iii) dividing the X pixel times X pixel region around the keypoint into Z subregions,
(iv) for each subregion, creating an orientation histogram having a bin for each of Y orientations of intensity gradient and populating the orientation histogram by, for each pixel of the subregion, adding +1 to the bin having the intensity gradient orientation of the pixel, and
(v) for all of the subregions, concatenating the orientation histograms to establish a descriptor having N = Z times Y coefficients.

14. An image document type assessment computer program, tangibly embodied on a non-transitory computer readable medium, the computer program including instructions for causing a computer to execute the method of assessing a type of a document from an image of the document according to any of claims 1 to 13.

15. A system for assessing a type of a document from an image of the document comprising:
(i) an image capture device which captures the image of the object,
(ii) a detector module which detects a representation of the document in the captured image,
(iii) a de-warp module which produces a de-warped representation of the document,
(iv) a selector module which selects a set of K keypoints of the de-warped representation of the document,
(v) a second calculator module which calculates a descriptor of the de-warped representation of the document at each keypoint,
(vi) a signature generator module which uses the descriptors and a pre-generated descriptor dictionary to generate a signature of the de-warped representation of the document, and
(vii) a type assessor module which uses the signature and a pre-generated signature database classified by document type to determine a document type of the de-warped representation of the document.
